(19) Europäisches Patentamt
European Patent Office
Office européen des brevets

(11) EP 3 092 046 B1

(12) **EUROPÄISCHE PATENTSCHRIFT**

(45) Veröffentlichungstag und Bekanntmachung des Hinweises auf die Patenterteilung:
**18.04.2018 Patentblatt 2018/16**

(21) Anmeldenummer: **14824784.4**

(22) Anmeldetag: **30.12.2014**

(51) Int Cl.:
***C08G 8/12*** (2006.01) ***C08G 8/36*** (2006.01)
***C10G 33/04*** (2006.01) ***B01D 17/04*** (2006.01)
***C08G 14/06*** (2006.01) ***C08G 14/12*** (2006.01)

(86) Internationale Anmeldenummer:
**PCT/EP2014/003478**

(87) Internationale Veröffentlichungsnummer:
**WO 2015/104048 (16.07.2015 Gazette 2015/28)**

(54) **ALKOXYLIERTES PRODUKT UND DESSEN VERWENDUNG**

ALKOXYLATED PRODUCT AND USE THEREOF

PRODUIT ALCOXYLÉ ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.01.2014 DE 102014000284**

(43) Veröffentlichungstag der Anmeldung:
**16.11.2016 Patentblatt 2016/46**

(73) Patentinhaber: **Hexion GmbH**
**58642 Iserlohn-Letmathe (DE)**

(72) Erfinder:
- **KUHLMANN, Gunda**
  **59077 Hamm (DE)**
- **BLÖTZ, Andreas**
  **58636 Iserlohn (DE)**

(74) Vertreter: **Palinsky, Kathrin**
**Hexion GmbH**
**Varziner Straße 49**
**47138 Duisburg (DE)**

(56) Entgegenhaltungen:
**WO-A1-2005/037883**
**GB-A- 2 463 927**
**US-A- 2 499 365**
**US-A- 2 524 889**
**US-A- 2 524 890**
**US-A- 2 524 892**
**US-A- 2 695 891**
**US-A- 3 169 118**
**US-A- 5 525 201**

- **DATABASE WPI Week 197337 Thomson Scientific, London, GB; AN 1973-54484U XP002737346, -& JP S48 29530 B (CASHEW KK) 11. September 1973 (1973-09-11)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 092 046 B1

**Beschreibung**

Demulgatoren (engl. Demulsifier) sind grenzflächenaktive polymere Verbindungen, die innerhalb kurzer Zeit die Aufspaltung von Emulsionen in deren Bestandteile bewirken.

Demulgatoren werden in unterschiedlichsten Einsatzgebieten verwendet. Großtechnisch industriell ist die Verwendung von Demulgatoren z.B. in der petrochemischen Industrie (z. B. Schmiermittelherstellung).

Besonders allerdings ist der Einsatz von Demulgatoren von Interesse, wenn es um die Aufbereitung von Rohölen geht. Bei der Gewinnung von Rohöl wird mit zunehmender Ausbeutung der Lagerstätten ein steigender Wasseranteil mitgefördert, der aufgrund der natürlich vorkommenden Emulgatoren in dem Öl emulgiert ist. Salze können in dem Wasser gelöst sein, die dann zu Korrosionsproblemen in den Anlagen der weiterverarbeitenden Industrie führen können. Um dies zu verhindern und auch aus ökonomischen Gründen, muss das Wasser vor dem Transport abgetrennt werden. Damit das Wasser aus dem Öl entfernt werden kann, ist die Zugabe eines Demulgators erforderlich.

Aus dem Stand der Technik sind Verbindungen, die als Demulgatoren geeignet sind, bekannt. So wurden Verbindungen wie Polyalkylenglykole, organische Sulfonate, alkoxylierte Alkylphenol-Formaldehyd-Diamin Polymere (WO 2005/037883) oder auch Anhydridverbindungen (WO 2009/148979) insbesondere zur Zerstörung bzw. zur Verhinderung von Wasser-in-Öl-Emulsionen bereits beschrieben. Die US 2524892 und US 2499365 beschreiben weiterhin ethoxylierte Phenolharze, bei deren Herstellung u.a. Cardanol und Ammoniak verwendet wurden.

Man ist aber stets auf der Suche nach neuen Verbindungen, die Wasser-in Öl-Emulsionen spalten können, um bisherige Anwendungen zu optimieren und neue Anwendungsgebiete zu erschließen.

Daher liegt der vorliegenden Anmeldung die Aufgabe zu Grunde, eine neue Stoffgruppe an Demulgatoren bereitzustellen, die eine breite Anwendbarkeit bei möglichst hoher Effektivität besitzen.

Gelöst wird diese Aufgabe erfindungsgemäß durch ein Produkt, dessen Herstellung durch die Merkmale des Anspruchs 1 gekennzeichnet ist.

Besonders bevorzugt ist, wenn das Alkylphenol ein verzweigtes oder unverzweigtes $C_1$-$C_{18}$- Alkylphenol ist, da dadurch die Hydrophobizität des Produktes gezielt eingestellt werden kann. Wiederum bevorzugt ist, die Verwendung von Methyl-, Ethyl-, Propyl-, Isopropyl-, Butyl-, Isobutyl-, Octyl-, Nonyl- und/oder Decylphenol, da diese Verbindungen leicht herstellbar und daher handelsüblich leicht zugänglich sind. Die entsprechenden Alkylsubstituenten des Phenols können in Para- oder Orthostellung zur OH-Gruppe angeordnet sein, wobei auch Mischungen aus o- und p- Alkylphenolen verwendet werden können.

Als verzweigtes oder unverzweigtes Alkenylphenol wird ein Alkenylphenol mit einer ungesättigten $C_2$-$C_{20}$-Kohlenwasserstoffgruppe verwendet. Durch die Länge der Kohlenwasserstoffkette kann die Reaktivität und Hydrophobie des Endproduktes gesteuert werden, wobei kurze Kohlenstoffketten sehr reaktiv sind und lange Kohlenstoffketten die Hydrophobizität erhöhen. Die entsprechenden Alkenylsubstituenten des Phenols können in Para- oder Orthostellung zur OH-Gruppe angeordnet sein, wobei auch wiederum Mischungen aus o- und p- Alkenylphenolen verwendet werden können. Weiterhin ist es möglich, einfach oder mehrfach ungesättigte Alkylphenole einzusetzen, wobei Doppelbindungen in der Haupt- und/oder Seitenkette der Alkenylgruppe vorhanden sein können.

Als erfindungsgemäß verwendete Alkenylphenole kommt zumindest ein Alkenylphenol ausgewählt aus Vinylphenol, Allylphenol, Methylallylphenol, 2,2-Dimethylpropylenphenol, Butenylphenol und Pentenylphenol zum Einsatz, da diese wiederum leicht zugänglich sind.

Das Molverhältnis von Alkylpenol zu Alkenylphenol soll vorzugsweise 1:0,05 bis 1:5, besonders bevorzugt 1:0,1 bis 1:0,7, betragen. Unterhalb des Verhältnisses 1:0,05 ist der Effekt der Alkenylgruppe auf die demulgierenden Eigenschaften zu gering und im Falle einer gewünschten weitergehenden Modifikation mit beispielsweisen Siloxanen die Anzahl der möglichen Reaktionsstellen zu gering.

Für die Herstellung des erfindungsgemäßen alkoxylierten Produktes wird als weitere Komponente eine Verbindung ausgewählt aus Ethylendiamin, Triethylendiamin, Tetraethylenpentamin, Pentaethylenhexamin, Aminoethylpiperazin, Phenylendiamin und/oder 1,2-Diaminocyclohexan hinzugegeben. Durch die Zugabe z. B. eines Diamins und anschließender Umsetzung mit einem Aldehyd (entsprechend der WO 2005/037883) wird die Kopfgruppe modifiziert, wodurch die Hydrophilie verbessert wird..

Als Aldehyd wird aufgrund der großtechnischen Bereitstellung Formaldehyd bevorzugt. Bevorzugt wird ein Molverhältnis von Phenolen (Summe aus Alkenylphenol und Alkylphenol) zu Formaldehyd 1:0,3 - 1:0,9. Wird weniger Formaldehyd eingesetzt, ist der erreichte Polymerisationsgrad nicht optimal. Übersteigt der Formaldehyd das Verhältnis, ist die Löslichkeit eingeschränkt und die Viskosität in der Formulierung zu hoch.

Durch Umsetzung zumindest eines verzweigten oder unverzweigten Alkylphenols, zumindest eines verzweigten oder unverzweigten Alkenylphenols mit einem Aldehyd, wird ein Produkt mit folgender beispielhafter chemischer Struktur erhalten, was dann der Alkoxylierung unterworfen wird:

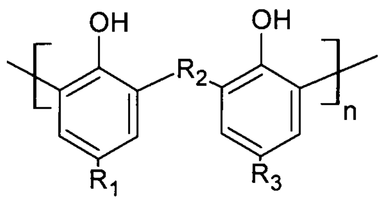

wobei

$R_1$ - verzweigte oder unverzweigte $C_1$-$C_{18}$- Kohlenwasserstoffgruppe, wobei sich $R_1$ in ortho- oder para-Stellung zur OH-Gruppe befinden kann.

$R_2$ - verzweigte oder unverzweigt gesättigte $C_1$- $C_5$ Kohlenwasserstoffgruppe

$R_3$ - verzweigte oder unverzweigte ungesättigte $C_2$-$C_{20}$-Kohlenwasserstoffgruppe, wobei sich $R_3$ in ortho- oder para-Stellung zur OH-Gruppe befinden kann

$$n \geq 3$$

Bei der erfindungsgemäßen Umsetzung zumindest eines verzweigten oder unverzweigten Alkylphenols, zumindest eines Alkenylphenols ausgewählt aus Vinylphenol, Allylphenol, Methylallylphenol, 2,2-Dimethylpropylenphenol, Butenylphenol und Pentenylphenol und einer Verbindung ausgewählt aus Ethylendiamin, Triethylendiamin, Tetraethylenpentamin, Pentaethylenhexamin, Aminoethylpiperazin, Phenylendiamin und/oder 1,2-Diaminocyclohexan mit einem Aldehyd wird folgende beispielhafte Struktur erhalten:

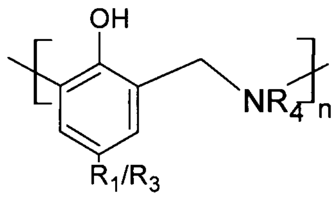

$R_4$: Wasserstoff oder $C_1$-$C_5$ Alkyl- oder Benzylgruppe

Als Alkoxylierungsmittel wird ein Alkylenoxid verwendet, ausgewählt aus Ethylenoxid, Propylenoxid, Butylenoxid, Ethylenkarbonat und/oder Propylenkarbonat und/oder deren Blockcopolymere, wie z.B. Ethylenoxid-Propylenoxid-Blockcopolymer. Besonders bevorzugt sind solche Blockcopolymere mit Molekulargewichten von 300 bis 5000, insbesondere 1000 bis 4100, wobei bis zu 3 Blöcke an Ethylenoxid-Propylenoxid-Einheiten in unterschiedlicher Reihenfolge das Blockcopolymer bilden können.

Anstelle der Alkoxylierung mit einem Alkoxylierungsmittel kann alternativ eine Veretherung durch Umsetzung mit einem Dialkohol beispielsweise Ethylenglykol, Propylenglykol, Polyethylenglykol oder Blockcopolymere aus Ethylenglykol und/ oder Propylenglykol erfolgen.

Erhalten wird ein erfindungsgemäßes Produkt z. B. mit folgender Struktur:

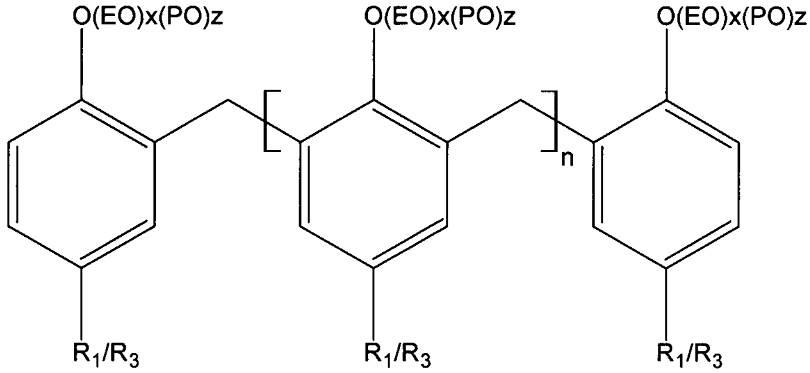

x und z beliebig voneinander unabhängige Zahlen, bevorzugt >1 und <20;

(EO) - Ethylenoxideinheit

(PO) -Propylenoxideinheit

Die Reihenfolge von (EO) und (PO) ist nicht festgesetzt.

Besonders bevorzugt ist, wenn das erfindungsgemäße Produkt hergestellt wird durch Umsetzung einer Mischung aus

1.) zumindest einem verzweigten oder unverzweigten Alkylphenol mit zumindest einem Alkenylphenol ausgewählt aus Vinylphenol, Allylphenol, Methylallylphenol, 2,2-Dimethylpropylenphenol, Butenylphenol und Pentenylphenol und einer Verbindung ausgewählt aus Ethylendiamin, Triethylendiamin, Tetraethylenpentamin, Pentaethylenhexamin, Aminoethylpiperazin, Phenylendiamin und/oder 1,2-Diaminocyclohexan mit einem Aldehyd unter azeotropen Bedingungen, bei einer Temperatur von 70 bis 160 °C und
2.) anschließender Alkoxylierung mit zumindest einem Alkylenoxid oder Veretherung mit einem Dialkohol.

Der Temperaturbereich von 70 bis 160 °C sollte eingehalten werden, da bei höheren Temperaturen die ungesättigten Kohlenwasserstoffgruppen von $R_3$ beginnen zu reagieren, was vermieden werden soll. Wird ein Katalysator verwendet, können das bevorzugt saure Katalysatoren wie z. B. Oxalsäure, Maleinsäure oder Fumarsäure in üblichen Konzentrationen sein.
Das erfindungsgemäße Produkt kann aufgrund der erzielten Eigenschaften basierend auf dessen chemischer Struktur als Additiv in Schmier- oder Treibstoffen oder auch als Klebrigmacher oder Verstärkerharz für Kautschuke verwendet werden.
Besonders geeignet ist das erfindungsgemäße Produkt als Demulgator, insbesondere als Demulgator für Wasser in Öl Emulsionen. Aufgrund der chemischen Konstitution hat es eine höhere Effizienz im Demulgationsprozess als beispielweise die in der WO 2005/037883 beschriebenen Produkte. Es war nicht zu erwarten, dass durch die Anwesenheit einer ungesättigten Bindung die Hydrophobizität positiv beeinflusst wird.
Anhand eines Ausführungsbeispiels, das nicht die Verbindung ausgewählt aus Ethylendiamin, Triethylendiamin, Tetraethylenpentamin, Pentaethylenhexamin, Aminoethylpiperazin, Phenylendiamin und/oder 1,2-Diaminocyclohexan enthält und demnach nicht zum erfindungsgemäßen Produkt führt, soll die Herstellung eines alkoxylierten Produktes deutlich gemacht werden.:

a) Herstellung des Copolymers aus Alkylenphenol, Alkylphenol und Formaldehyd

Eine Mischung aus 267 g Allylphenol, 430 g Nonylphenol, 7g Oxalsäure und 0,7g Phasentransferkatalysator (Natriumalkylbenzsulfonat) und 188 g Xylol werden auf 120 °C erhitzt. Anschließend werden 229 g Formaldehydlösung (45-%-ig) in einem Zeitraum von 2,5 Stunden zugegeben während Wasser abdestilliert wird.
Viskosität des Copolymers: 440 mPas bei 50 °C
Feststoffgehalt: 70,8 %
Molmasse: 2.514 g/mol
Freier Allylphenolgehalt: 0,3 %
Freier Nonylphenolgehalt: 1 %
Das so hergestellte Copolymer ist für ca. 1 Stunde in der Lage weiter zu reagieren.

b) Herstellung des alkoxylierten Produktes

Für die Alkoxylierungsreaktion mit Ethylenoxid werden folgende Reaktionsbedingungen eingestellt:

Das oben beschriebene Copolymer wird in einem 1 l Glasautoklaven eingebracht und der Druck im Autoklaven mit Stickstoff auf ca. 0,2 bar Überdruck eingestellt. Danach werden bei 140°C die gewünschte Menge Ethylenoxid (EO) (z.B. 10 Mol EO bezogen auf 1 Mol Phenole) zudosiert, wobei der Druck 4,5 bar nicht übersteigen sollte. Nach beendeter EO Zugabe wird noch 30 Minuten weiterreagiert.

Anhand des William C Griffin Tests (Griffin, W.C.; J. Soc. Cosmet. Chem. 1954) konnte festgestellt werden, dass ethoxyliertes Allylphenol-Nonylphenol-Formaldehydharz eine verbesserte Wasserlöslichkeit im Vergleich zu ethoxyliertem Nonylphenol-Formaldehydharz besitzt.

Berechnet wurde die verbesserte Wasserlöslichkeit anhand des HLB (hydrophilliclipophillic balance) Wertes, wobei ein höherer Wert für eine höhere Hydrophilie der Substanz steht.

So betrug der HLB-Wert des ethoxylierten Allylphenol-Nonylphenol-Formaldehydharz 12,2 im Vergleich zu ethoxyliertem Nonylphenol-Formaldehydharz 11,2.

Bestimmung der Spaltwirksamkeit von Erdöldemulgatoren:

Zur Bestimmung der Wirksamkeit wurde der Grad der Entwässerung des Rohöls bestimmt. Dazu werden in Spaltergläser (konisch zulaufende, graduierte Glasflaschen) jeweils 100 ml Rohölemulsion eingefüllt, eine definierte Menge Demulgator zudosiert und durch intensives Schütteln vermischt. Nach 22 h bei 80 °C werden Proben von dem Öl aus dem oberen Teil (Topcut) entnommen und der Wassergehalt (in ml) nach Karl Fischer bestimmt. Auf diese Weise wurde die Entwässerung des Öls und damit die Wirksamkeit des Demulgators bestimmt

Tab. 1

| | | Top Cut (50 %) nach 22 h | | |
|---|---|---|---|---|
| Demulgator | Testmenge/ ppm | W1 [ml] | W2 [ml] | • ΔW |
| erfindungsgemäß:<br>Alkoxyliertes Copolymer aus Alkylenphenol, Alkylphenol und Formaldehyd (hergestellt nach b) | 100 | 7 | 7 | 0 |
| Vergleich:<br>Alkoxyliertes Nonylphenol-Formaldehydharz | 100 | 3,6 | 8 | 4,4 |
| W1: wird ermittelt nach Zugabe des Demulgators (Schütteln und Stehen); Probe der Ölphase wird mit Xylol ausgeschüttelt und die dann separierte Wassermenge W1 wird bestimmt<br>W2: wird ermittelt nach Zugabe des Demulgators (Schütteln und Stehen); Probe der Ölphase wird mit Xylol und einem Superdemulgator ausgeschüttelt und damit die Gesamtmenge Wassermenge im Öl bestimmt.<br>ΔW: verbliebene, emulgierte Wassermenge in der Ölprobe. | | | | |

Aus Tabelle 1 wird ersichtlich, dass mit Hilfe des hergestellten Produktes das Rohöl intensiver entwässert werden konnte. Dadurch ist eine höhere Effektivität des Demulgators nachgewiesen worden, wodurch die Dosierraten verringert werden können. Damit einher geht eine größere Einsatzbreite des Demulgators im Vergleich zu herkömmlichen Demulgatoren.

## Patentansprüche

1. Alkoxyliertes Produkt hergestellt durch Umsetzung einer Mischung aus

   a) zumindest einem verzweigten oder unverzweigten Alkylphenol,
   b) zumindest einem Alkenylphenol ausgewählt aus Vinylphenol, Allylphenol, Methylallylphenol, 2,2-Dimethylpropylenphenol, Butenylphenol und Pentenylphenol und
   c) einer Verbindung ausgewählt aus Ethylendiamin, Triethylendiamin, Tetraethylenpentamin, Pentaethylenhexamin, Aminoethylpiperazin, Phenylendiamin und/oder 1,2-Diaminocyclohexan

mit einem Aldehyd und anschließender Alkoxylierung mit zumindest einer Verbindung ausgewählt aus Ethylenoxid, Propylenoxid, Butylenoxid, Ethylenkarbonat und/oder Propylenkarbonat und/oder deren Blockcopolymere oder Veretherung mit zumindest einem Dialkohol.

2. Alkoxyliertes Produkt nach Anspruch 1, **dadurch gekennzeichnet, dass** das Alkylphenol ein $C_1$-$C_{18}$- Alkylphenol ist.

3. Alkoxyliertes Produkt nach Anspruch 2, **dadurch gekennzeichnet, dass** das Alkylphenol ausgewählt ist aus Methyl-, Ethyl-, Propyl-, Butyl-, Nonyl- und/oder Decylphenol.

4. Alkoxyliertes Produkt nach Anspruch 1, **dadurch gekennzeichnet, dass** der Dialkohol ausgewählt ist aus Methylenglykol, Propylenglykol, Polyethyleneglykol oder Blockcopolymere aus Ethylenglykol und/oder Propylenglykol.

5. Verwendung des alkoxylierten Produktes des Anspruchs 1 als Demulgator.

6. Verwendung des alkoxylierten Produktes nach Anspruch 5 als Demulgator für Wasser in Öl Emulsionen.

## Claims

1. Alkoxylated product prepared by reacting a mixture of

a) at least one branched or unbranched alkylphenol,
b) at least one alkenylphenol selected from vinylphenol, allylphenol, methylallylphenol, 2, 2 dimethylpropylenephenol, Butenylphenol and pentenylphenol and
c) a substance selected from ethylenediamine, triethylenediamine, tetraethylenepentamine, pentaethylenehexamine, aminoethylpiperazine, phenylenediamine and/or 1,2-diaminocyclohexane

with an aldehyde and subsequent alkoxylation with at least one substance selected from ethylene oxide or propylene oxide or butylene oxide or ethylene carbonate and/or propylene carbonate and/ or block copolymers thereof or etherification with at least one dialcohol.

2. Alkoxylated product according to Claim 1, **characterized in that** the alkylphenol is a $C_1$-$C_{18}$ alkylphenol.

3. Alkoxylated product according to Claim 2, **characterized in that** the alkylphenol is selected from methyl-, ethyl-, propyl-, butyl-, nonyl- and/or decylphenol.

4. Alkoxylated product according to Claim 1, **characterized in that** the dialcohol is selected from ethylene glycol, propylene glycol, polyethylene glycol or block copolymers of ethylene glycol and/or propylene glycol.

5. Use of the Alkoxylated product of Claim 1 as demulsifier.

6. Use of the Alkoxylated product according to Claim 5 as demulsifier for water- in-oil emulsions.

## Revendications

1. Un produit alcoxylé préparé en faisant réagir un mélange de

a) au moins un alkylphénol ramifié ou non ramifié,
b) au moins un alcénylphénol choisi parmi vinylphénol, allylphénol, methylallylphénol, 2,2-diméthylpropylènphénol, buténylphénol, penténylphénol et
c) une substance choisie parmi l'éthylènediamine, la triéthylènediamine, la tétraéthylènepentamine, la pentaéthylènehexamine, aminoéthyl pipérazine, la phénylènediamine et/ou 1, 2-diaminocyclohexane,

avec un aldéhyde et une alcoxydation subséquente avec au moins une substance choisie parmi l'oxyde d'éthylène, l'oxyde de propylène, l'oxyde de butylène, le carbonate d'éthylène et/ou le carbonate de propylène et/ou des copolymères séquencés de ceux-ci ou une éthérification avec au moins un dialcool.

2. Le produit alcoxylé selon la revendication 1, **caractérisé en ce que** l'alkylphénol est un alkylphénol en $C_1$-$C_{18}$.

3. Le produit alcoxylé selon la revendication 2, **caractérisé en ce que** l'alkylphénol est choisi parmi les groupes méthyle, éthyle, propyle, butyle, nonyl et/ou décylphénol.

4. Produit alcoxylé selon la revendication 1, **caractérisé en ce que** le dialcool est choisi parmi l'éthylène glycol, le propylène glycol, du polyéthylèneglycol ou des copolymères séquencés d'éthylène glycol et / ou propylène glycol.

5. Utilisation du produit alcoxylé selon la revendication 1 comme désémulsifiant.

6. Utilisation du produit selon alcoxylé de la revendication 5 en tant que désémulsifiant pour des émulsions d'eau dans l'huile.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2005037883 A
- WO 2009148979 A
- US 2524892 A
- US 2499365 A


### In der Beschreibung aufgeführte Nicht-Patentliteratur


- **GRIFFIN, W.C.** *J. Soc. Cosmet. Chem.,* 1954